# EUROPEAN PATENT APPLICATION

(11) **EP 3 220 667 A1**
(43) Date of publication of application: **20.09.2017**
(21) Application number: 16305271.5
(22) Date of filing: 14.03.2016
(51) Int. Cl.: H04S 7/00, G06F 3/01, G02B 27/00, H04R 1/10

(54) **HEADPHONES FOR BINAURAL EXPERIENCE AND AUDIO DEVICE**

(71) Applicant: Thomson Licensing, 92130 Issy-les-Moulineaux (FR)
(72) Inventor: Baum, Peter Georg, 30539 Hannover (DE); Arnold, Michael, 30916 Isernhagen (DE); Drexler, Michael, 30989 Gehrden (DE); Kubsch, Stefan, 31559 Hohnhorst (DE); Riemann, Uwe, 38124 Braunschweig (DE); Spille, Jens, 30966 Hemmingen (DE)
(74) Representative: Huchet, Anne

(57) **Abstract**

For an immersive listening experience modern headphones support headtracking technology typically based on gyroscope technology. The disclosure concerns improved headphones (10) supporting a first headtracking system consisting of a measuring unit integrated or attached to the headphones (10) which transfer measuring signals to processing means in an audio device (16) which is connected with the headphones (10). Such measuring unit can be in the form of a camera (15) or a shapecable (13) equipped with protractors (133) or strain gauges (133, 135, 136). Both measuring units will measure the head movements independent of inertial effects. Corresponding audio devices (16) will be connected with the headphones (10) and comprise receiving means for receiving the signals from the measuring unit (15, 133, 135, 136) and processing means for processing the received signals.

## Description

The disclosure relates to headphones comprising headtracking technology for an immersive listening experience and corresponding audio devices for connecting with the headphones.

### Background

For an immersive listening experience modern audio systems comprise headtracking technology. These headtracking systems use a global reference system to adapt the sound field depending in the head movement. Such sound field may be generated with a headphone. The goal is to reproduce the sound like in real life. If the listener is turning the head to left, the noise from sources on the left side of the listener will be accentuated and the noise from sources on the right side will be attenuated. Even more, the sound field needs to be adapted such that the spatial position of noise sources will be shifted in dependence of the head movement. The usual way to build the global reference system is by means of a gyroscope. The gyroscope detects the turning of the head based on an angular acceleration measurement. The problem is that the position in this global reference system changes even when the user as a whole moves in the system. If the user listens for example to sound in a train without moving himself, the sound field will move nevertheless if the train is taking a curve and heading into a different direction. The angular acceleration measurement technology will also respond to accelerations of the train. This effect is disturbing the listening experience for such immersive sound systems.

The problem is explained in detail in the reference US 2013/0191068 A1. This reference proposes to use in the preferred embodiment a first positioning system comprising a reference unit which is fixedly installed remote from the head and a corresponding detection unit attached to the headphone. In a preferred embodiment the reference unit is a light emitting diode LED and the detection unit is a light detector. Inside the field of view of the LED, the absolute head position can be detected. Outside the field of view of the LED a second positioning system based on gyroscope technology which is an integrated component of the headphone or an external component attached to the headphone will be used for determining the head position.

### Summary

The solution disclosed in US 2013/0191068 A1 has the disadvantage that an external reference unit needs to be installed in the vehicle where the listener is located. This may work for private owned cars but not for public transportation vehicles like busses, trams, and trains. There is therefore a need for an improved positioning system which can cope without an external reference unit to be installed in the vehicle by at the same time avoiding inaccuracies resulting from the vehicle movements.

These and other objects are solved with headphones and corresponding audio devices according to the independent claims 1, 9, and 13.

The dependent claims contain advantageous developments and improvements to the headphones and the audio devices according to the disclosure.

According to the solution covered by the independent claim 1, the headphones according to the disclosure comprise a first headtracking measuring unit measuring head movements not being sensitive to inertial effects. Such headphones are characterized in that, the first headtracking measuring unit consists of a measuring component integrated or attached to the headphones which transfer measuring signal to processing means in an audio device which is connected with the headphones. This proposal has the advantage that for the first headtracking system there is no need to mount an external component anywhere in the vehicle a passenger is travelling with. In particular for public transportation systems this solution is of great advantage since the binaural headphones with first headtracking system thus are autarkical.

In an enhanced embodiment the headphones are equipped with a second headtracking measuring unit measuring head movements based on inertial effects, in particular a gyroscope. The gyroscope can exactly measure the head movements as long as the user is not moving in a vehicle.

In one embodiment the first headtracking measuring unit comprises at least one video camera or still picture camera. The camera can be integrated in the headphones frame. Such a video or still picture camera is a mass product which is used in smart phones for example and thus is a relatively cheap component.

For such headphones the corresponding audio device is characterized in that during headtracking with the camera video data or picture data is received by the audio device, and said audio device is comprising video processing or still picture processing means which process said video data or still picture data to determine a relative movement of the listener's head not influenced by the vehicle movement.

In one embodiment said video processing or still picture processing comprises an algorithm for edge detection, in particular vertical edges and/or horizontal edges are detected. Typically such vertical and/or horizontal edges appear in the picture the camera is taking. Such edges may for example be edges of doors or windows or seats of the vehicle. In another example the edge detection is adapted to detect the edges of a tablet computer or smart phone the listener is using in front of the camera.

In a further enhanced embodiment the video processing or still picture processing comprises comparing the position of the detected vertical and/or horizontal edge with an edge position defined during a calibration phase of the second headtracking system comprising at least one camera. The calibration phase is initiated by the listener for example when sitting down at the vehicle by pressing a button on the audio device like in a dedicated user menu, or by pressing a button on the headphones or the headphones cable. The amount of head turning is e.g. calculated based on the difference between the determined current edge position and the position during calibration phase.

In a further improved embodiment of the headphones, the headphones comprise a shapecable. The shapecable can also measure head movements independent of inertial effects. At least the inertial effect can be neglected for the purpose of the disclosure. Such a shapecable knows its shape and therefore any head turning will modify the shape of the cable such that the shape of the cable is a measure for the head turning.

An improvement concerns a shapecable which comprises a clip for fixing the shapecable at the listener's clothes, wherein the part of the shapecable being equipped with protractors or strain gauges begins at the clip position of the cable and goes on to the point where the shapecable is connected with the auricles of the headphones. This then minimizes the section of the cable which is equipped with shapecable and thus reduces cost.

In another embodiment an audio device corresponding to the headphones as equipped with shapecable is comprising receiving means which during headtracking with said shapecable receive measuring signals from the protractors or the strain gauges, and is further comprising processing means which process the measured inclination angles of the protractors or dilatation values of said strain gauges to determine the current shape of the shapecable. Preferably, said processing means sum up the inclination angles of the protractors or the dilatation values of the strain gauges of the shapecable to determine the current shape of the shapecable. Since shapecables are not yet mass products, the price for such shapecables is currently higher than for the camera solution. However, this solution can cope with less expenditure in terms of signal processing and memory requirements.

### Drawings

An exemplary embodiment of the present disclosure is shown in the drawing and is explained in greater detail in the following description.

In the drawings:
- Fig. 1: shows headphones according to the invention;
- Fig. 2: shows a passenger wearing headphones with headtracking measuring unit sitting in a tram;
- Fig. 3: illustrates vertical edges and horizontal edges in front of the passenger which may be used for headtracking;
- Fig. 4: illustrates where a camera is positioned at the headphone frame;
- Fig. 5: shows a passenger wearing headphones with headtracking measuring unit sitting in the tram and using a tablet computer;
- Fig. 6: illustrates vertical edges and horizontal edges of the tablet computer in front of the passenger which may be used for headtracking
- Fig. 7: shows a listener wearing headphones equipped with a shape cable;
- Fig. 8: illustrates a first construction of a shapecable; and
- Fig. 9: illustrates a second construction of a shapecable.

### Exemplary embodiments

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

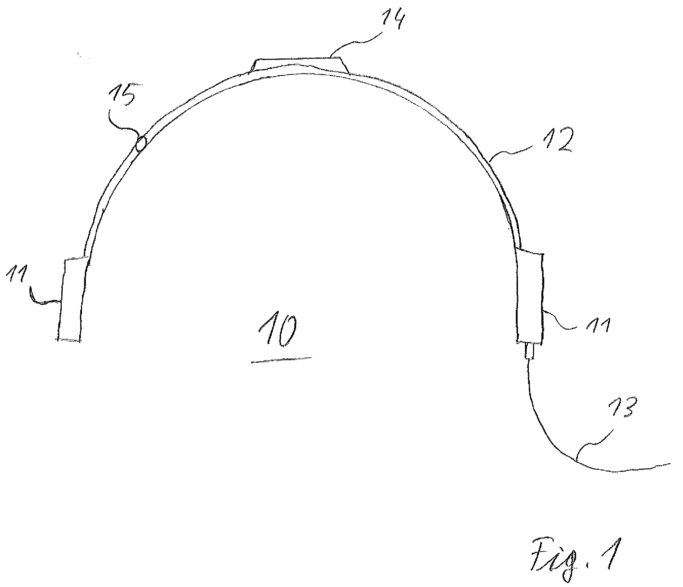

It is one idea of the invention to add a camera, in particular video camera to headphones as a headtracking measuring unit. The headphones 10 equipped with video camera 15 is depicted in **Fig. 1****.** The headphones auricles are labeled with reference number 11. Headphones frame is labelled with reference number 12. The cable which will be connected with the audio device (not shown) is labelled with reference number 13. The headphone 10 is equipped with two headtracking measuring units. The two headtracking measuring units comprise a gyroscope 14 and a video camera 15. The power supply for gyroscope 14 and video camera 15 is not distinctly shown but may be located inside a headphone auricle 11. Alternatively, the wiring for the power supply is embedded inside the cable 13 and power is supplied by the external audio device into which headphone cable 13 is plugged in.

With gyroscope 14 the head turning is measured in horizontal and/or vertical direction. This information is fed to the audio device which does the sound processing to adapt the sound field accordingly. The adapted sound field will be generated with the electroacoustic transducers located inside the headphones auricles.

With the video camera 15 the scenery in front of the listener will be observed. The video camera 15 can be of the type of a typical front or back smart phone camera. The video signal will be fed trough the frame 12 and on to the audio device with corresponding wiring in the cable 13.

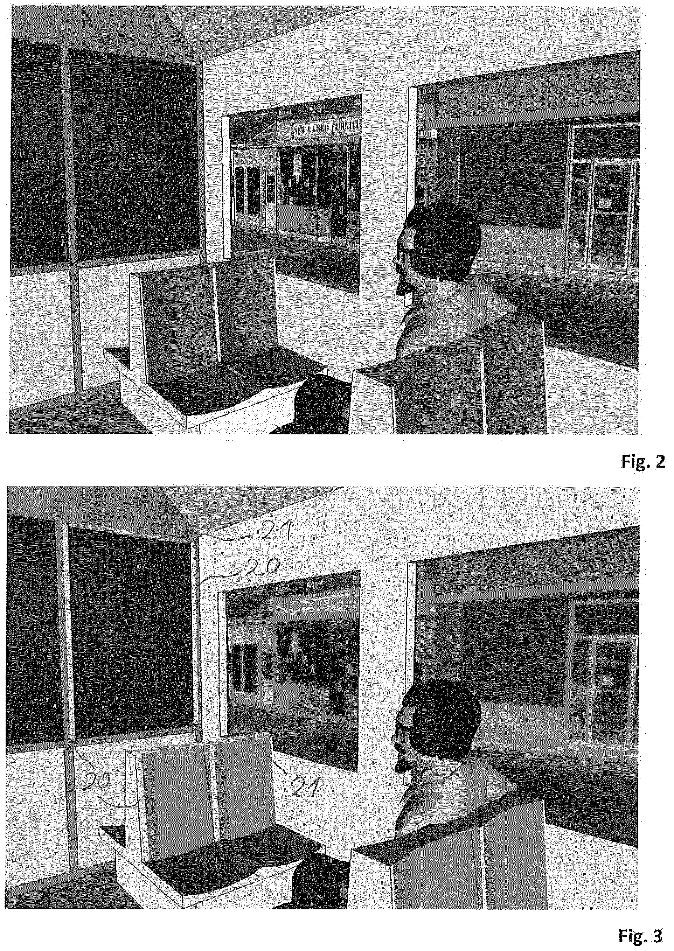

A typical situation where a listener wearing headphones is sitting in a tram is illustrated in **Fig. 2****.** In Fig. 2 the tram is standing still in station. The image when looking out of the window is clear. Any head turning of the listener will be correctly measured with gyroscope 14. Therefore, sound field adaptation done with the listener's audio player in pocket, e.g. smart phone will be correctly made.

**Fig. 3** now shows the situation that the tram is driving through the station. The image when looking out of the window is blurred. If the user listens for example to sound in a train without moving himself, the sound field will move nevertheless if the train is taking a curve and heading into a different direction. In such a situation in particular when the tram is accelerating or braking or driving in a curve the gyroscope alone cannot correctly measure the head turning. In the improved head tracking system according to the disclosure the video camera 15 will be used to compensate for such deficiencies. With video processing some vertical 20 and/or horizontal edges 21 will be extracted. The position of one or more of the edges will be tracked in comparison to a reference position. Such reference position is recorded when the listener starts the head tracking system based on video camera 15. The starting may be done by pressing a button on the audio device like in a dedicated user menu, or by pressing a button on the headphones 10 or cable 13. The head turning angle is measured against the recorded reference position of the edge 20, 21. The algorithm for edge detection with video processing or still picture processing is known. There are plenty of techniques available in the prior art. It is expressively referred to the corresponding techniques listed under the Wikipedia entry of "edge detection".

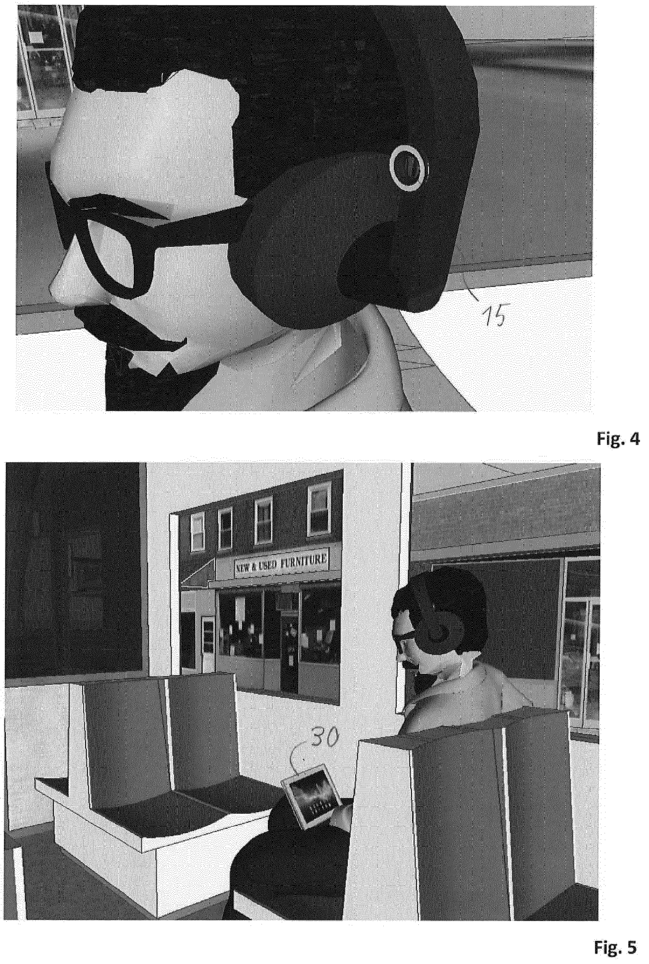

**Fig. 4** illustrates where the camera 15 is positioned at the headphones frame 12. Two cameras 15 may be used, one as shown in Fig. 1 and the other as seen in Fig. 4 to enhance the accuracy of edge detection. This then corresponds to a stereoscopic camera for generating a 3D image.

**Fig. 5** now shows the listener sitting in the tram and using a tablet computer 30 in front of him. The audio title to which the listener is listening may be played back on the tablet computer 30 and the audio data may be wirelessly transferred to the headphones, e.g. with Bluetooth communication. In such typical situation there is another opportunity to set up a local reference coordinate system based on edge detection. Here, the edges of the tablet computer 30 will be used as a reference.

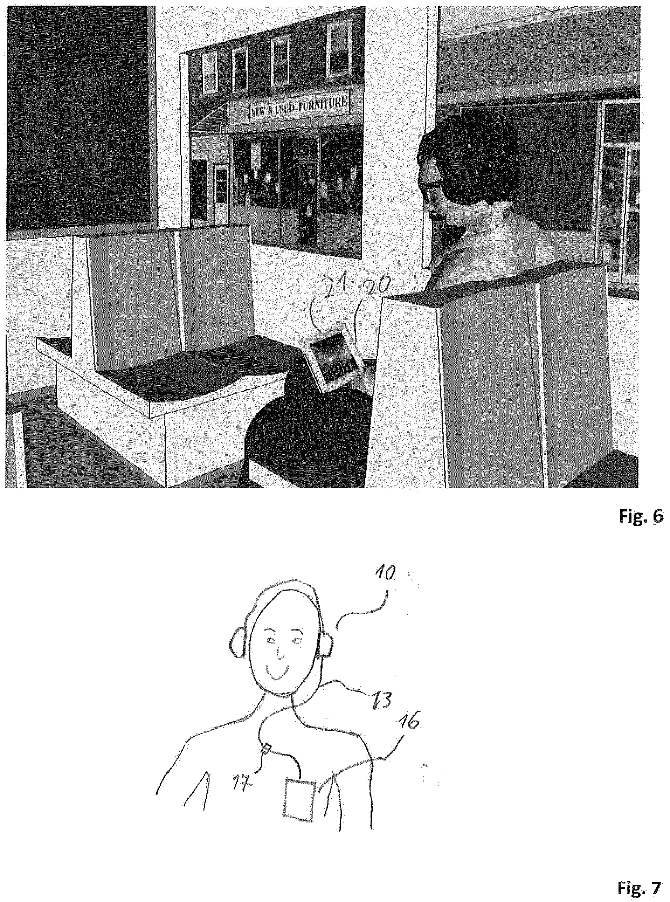

This is illustrated in **Fig. 6****.** For edge detection again camera 15 of headphones 10 will be used to take pictures. The video or still picture data will be communicated to the headphones wire-bound or wirelessly and the video processing or still picture processing will be performed inside the tablet computer 30. Vertical edges 20 are used for measuring the head turning angle in horizontal direction and horizontal edges may be used for resolving the head turning angle in vertical direction. This then will be used to adapt the sound field accordingly. In this more sophisticated embodiment based on extensive video processing, there is no need anymore for adding a gyroscope 14 to the headphones 10 such that the head movements will be measured with the video or still picture camera 15 alone. In a less sophisticated embodiment the measurement of the gyroscope it will only be checked if the vertical and/or horizontal edges are still positioned where they have been detected during starting the session and the gyroscope measurement result will only be corrected or suppressed when it is found that the edges are still at the same place as during calibration time.

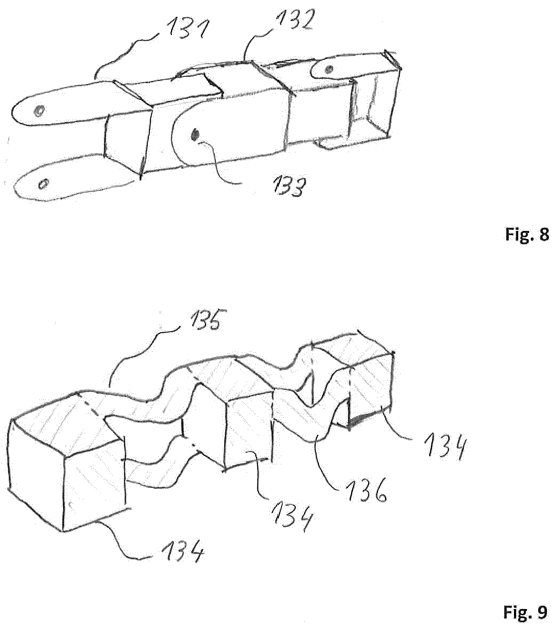

**Fig. 7** now shows a situation where a listener is wearing headphones equipped with a shape cable 13. Normally a flexible cable connects the playing device 16 (e.g. MP3 Player) with the headphones. In this embodiment a robot-snack like cable is used instead. Such a cable is a cable that knows his shape (ShapeCable). The cable will be less flexible as a normal headphones cable. The construction of the shape cable 13 may be in the form of a chain consisting of a plurality of links. This type of construction is illustrated in **Fig. 8****.** The link 131 of the chain is a typical fixing element of the cable. The link 132 comprises a point 133 with protractors built-in.

The principle of this construction is shown in a product video from the MIT Media Lab - Tangible Media Group. This video is accessible under the following link:
1) http://tangible.media.mit.edu/project/lineform/
   The cable consists of a line consisting out of a row of electric actuator motors and protractors, which can learn (measure) it's current form and repeat the form later using the electric actuator motors. For the purpose of using a cable for setting up a local reference system, only a row of protractors and no actuator motors are needed in the ShapeCable. The technique is like in the FaroArm, see under the link
2) http://www.faro.com/en-us/products/metrology/measuring-arm-faroarm/overview
   but with much more (hundreds) arm elements plus the wires to feed the headphones with audio signals and to transport the video signal from headphones to audio player and the corresponding power supply wires. The resulting cable then is more like the ShapeTape see under the link
3) https://www.google.de/url?sa=t&rct=j&q=&esrc=s&source=web&cd=1&ved=OCCsQFjAA ahUKEwi63cDMilbJAhXHCCwKHSOoBZ0&url=http%3A%2F%2Fwww.dgp.toronto.edu%2F ∼ravin%2Fpapers%2Fi3dg99 shapetape.pdf&usg=AFQjCNFHU5FidwmawBlpAhnxqh fBQ kBDg&cad=rja or https://www.youtube.com/watch?v=xVHuBwb0aAg.

The idea is that the playing device 16 has a fixed position at body, e.g. in the shirt pocket. The cable is flexible but constructed out of a row of fixed elements with protractors in between. Summing up all angels will give the position of the end of the cable. This will be compared with the beginning of the cable. E.g. in this case the headphones position related to the playing device is known and can be used to track head movements relative to the body (device position).

Instead of protractors strain gauges could be used mounted on flexible elements. Again wires for the headphone need to be embedded in the cable, too. An embodiment with strain gauges is illustrated in **Fig. 9****.** Between the two links 134 strain gauges 135 and 136 will be positioned alternately, one 135 measuring horizontal dilatation and the other 136 measuring vertical cable dilatation.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

The disclosure is not restricted to the exemplary embodiments described here. There is scope for many different adaptations and developments which are also considered to belong to the disclosure.

## Claims

1. Headphones (10) comprising a first headtracking measuring unit measuring head movements, **characterized in that,** said first headtracking measuring unit is consists of a measuring component integrated or attached to the headphones (10) which measures head movements independent of inertial effects, which transfer measuring signals to processing means in an audio device (16) which is connected with the headphones (10).

2. Headphones (10) according to claim 1, further comprising a second headtracking measuring unit measuring head movements based on inertial effect in particular a gyroscope (14).

3. Headphones (10) according to claim 1 or 2, wherein the first headtracking unit comprises at least one video camera or still picture camera (15).

4. Headphones (10) according to claim 1 or 2, wherein the second headtracking unit comprises a shapecable (13) which is capable to measure its current shape.

5. Headphones (10) according to claim 4, wherein the shapecable (13) is constructed as a chain with links (131, 132, 134, 135) of at least two types, wherein at least one type of said links comprises a protractor (133) for measuring the inclination angle of said link.

6. Headphones (10) according to claim 4, wherein the shapecable (13) is constructed as a chain with links (134), wherein strain gauges (135, 136) are positioned between two links which measure horizontal and/or vertical dilatation of the shapecable (13).

7. Headphones (10) according to one of claims 4 to 6, wherein the wires for the audio signals, the measuring signals, and the power supply are positioned inside the shapecable (13).

8. Headphones (10) according to one of claims 4 to 7, wherein the shapecable comprises a clip (17) for fixing the shapecable at the listener's clothes, wherein the part of the shapecable (13) being equipped with protractors (133) or strain gauges (135, 136) begins at the clip (17) position of the cable and goes on to the point where the shapecable (13) is connected with the auricles (11) of the headphones (10).

9. Audio device (16) supporting headtracking with connected headphones (10) according to claim 3, **comprised by,** receiving means which receive during headtracking with the camera (15) video data or picture data, said audio device (16) further comprising video processing or still picture processing means which process said video data or still picture data.

10. Audio device (16) according to claim 9, wherein said video processing or still picture processing comprises an algorithm for edge detecting, in particular vertical edges and/or horizontal edges (20, 21).

11. Audio device (16) according to claim 9, wherein the position of the detected vertical and/or horizontal edge (20, 21) is compared to an edge position defined during a calibration phase of the second headtracking system comprising at least one camera (15).

12. Audio device (16) according to claim 9, wherein said algorithm for edge detection is adapted to detect the edges of a tablet computer (30) or smart phone the listener is using in front of the camera (15).

13. Audio device (16) supporting headtracking with connected headphones (10) according to one of claims 4 to 8, **characterized in that,** during headtracking with said shapecable (13) measuring signals from the protractors (133) or the strain gauges (135, 136) are received by the audio device (16), said audio device (16) comprising processing means which process the measured inclination angles of the protractors (133) or dilatation of said strain gauges (135, 136) to determine the current shape of the shapecable (13).

14. Audio device (16) according to claim 13, wherein said processing means sum up the inclination angles of the protractors (133) or the dilatation values of the strain gauges (135, 136) of the shapecable (13) to determine the current shape of the shapecable (13).
